**Europäisches Patentamt**

**European Patent Office**

**Office européen des brevets**

(19)

(11) Veröffentlichungsnummer: **0 407 388 B1**

# (12) EUROPÄISCHE PATENTSCHRIFT

(45) Veröffentlichungstag der Patentschrift:
**11.12.91 Patentblatt 91/50**

(21) Anmeldenummer: **89900244.8**

(22) Anmeldetag: **17.12.88**

(86) Internationale Anmeldenummer:
**PCT/EP88/01172**

(87) Internationale Veröffentlichungsnummer:
**WO 89/08564 21.09.89 Gazette 89/23**

(51) Int. Cl.$^5$: **B60H 1/00**, B60H 1/32

(54) **STEUERUNG FÜR EINE KLIMAANLAGE VON KRAFTFAHRZEUGEN.**

(30) Priorität: **12.03.88 DE 3808319**

(43) Veröffentlichungstag der Anmeldung:
**16.01.91 Patentblatt 91/03**

(45) Bekanntmachung des Hinweises auf die
Patenterteilung:
**11.12.91 Patentblatt 91/50**

(84) Benannte Vertragsstaaten:
**DE FR GB IT**

(56) Entgegenhaltungen:
**EP-A- 23 052**
**US-A- 4 385 503**
**US-A- 4 604 873**

(73) Patentinhaber: **AUDI AG**
**Auto-Union-Strasse 1 Postfach 220**
**W-8070 Ingolstadt (DE)**

(72) Erfinder: **GROSSMANN, Holger**
**Blütenweg 10**
**W-8070 Ingolstadt (DE)**
Erfinder: **TERVEEN, Axel**
**Connollystr. 14**
**W-8000 München (DE)**
Erfinder: **WIEDEMANN, Heinz**
**Salbeistr. 7**
**W-8070 Ingolstadt (DE)**
Erfinder: **PABST, Hans-Georg**
**Robert-Koch-Str. 2**
**W-8074 Gaimersheim (DE)**

(74) Vertreter: **Engelhardt, Harald**
**Audi AG Postfach 2 20**
**W-8070 Ingolstadt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Steuerung für eine wahlweise im Frischluft- oder Umluftbetrieb betreibbare Klimaanlage von Kraftfahrzeugen, wobei von der Bedienperson oder Automatik gewählter Stellung "Umluftbetrieb" beim ersten Anlaufen der Klimaanlage nach dem Start des Kraftfahrzeugmotors diese zunächst für einen kurzen Zeitraum im Frischluftbetrieb betrieben wird.

Eine derartige Steuerung für eine Klimaanlage ist aus der EP-A1-0 023 052 oder der US-A 4 385 503 bekannt. Das selbsttätige Umschalten auf Frischluftbetrieb ist gegeben, wenn die Innenraumtemperatur höher ist als die Außentemperatur und die Außentemperatur wiederum größer als die gewünschte Temperatur ist. Durch die bekannte Steuerung wird der Anfangswirkungsgrad erhöht, da relativ kältere Außenluft anstelle der Luft des Fahrgastraumes angesaugt wird.

Der Erfindung liegt die Aufgabe zugrunde, die bekannte Steuerung für eine Klimaanlage so weiterzubilden, daß die Luftqualität im Fahrgastraum verbessert wird.

Die Aufgabe wird durch die kennzeichnenden Merkmale des Patentanspruchs gelöst.

Dadurch, daß das Umschalten auf den Frischluftbetrieb unabhängig von der Außentemperatur, der Innenraumtemperatur und der eingestellten Solltemperatur erfolgt und dabei der Zeitraum für den Frischluftbetrieb über ein Zeitglied vorgegeben wird (Versuche haben gezeigt, daß je nach baulichen Gegebenheiten ein "Frischluft-Vorlauf" von ein bis zwei Minuten ausreichend sein kann), ist sichergestellt, daß unabhängig von den genannten Parametern die Luft des Fahrgastraumes bereits beim ersten Anlaufen der Klimaanlage gegen Frischluft ausgetauscht und dadurch die Luftqualität wesentlich verbessert wird. Wenn nämlich gleich von Anfang an die Klimaanlage im Umluftbetrieb betrieben wird, dann wird nur die verbrauchte, sich ggf. seit vielen Stunden im Fahrzeug befindliche Luft umgewälzt. Dieser Luft können unter Umständen auch Emissionen aus Bauteilen im Fahrgastraum des Fahrzeuges beigemengt sein. Es kann nämlich oft nicht ausgeschlossen werden, daß sich bestimmte Stoffe - vornehmlich aus Kunststoffteilen - verflüchtigen. Außerdem ist es möglich, daß Treibstoff aus einem im Kofferraum eines Kombifahrzeuges untergebrachten Reservekanisters durch die Wände des Kanisters diffundiert.

Die angesprochenen Emissionen können auch bei niedrigeren Temperaturen auftreten. Dabei kann ggf. die Außentemperatur höher sein als die Temperatur im Fahrgastraum. Wenn nun beim ersten Anlaufen der Klimaanlage diese - wie vorgeschlagen - zunächst im Frischluftbetrieb und nicht im Umluftbetrieb betrieben wird, dann ist damit anfangs eine Verschlechterung des Wirkungsgrades gegeben. Der Fall, daß die Außentemperatur höher als die Innentemperatur ist, tritt in der Praxis relativ selten auf. Aber auch in diesem Fall kann die geringfügige Wirkungsgradverschlechterung in Kauf genommen werden, da dadurch sichergestellt ist, daß verbrauchte, ggf. mit Emissionen beladene Luft schnell ausgetauscht wird. Außerdem wird der Frischluftbetrieb durch das Zeitglied begrenzt.

## Patentansprüche

1. Steuerung für eine wahlweise im Frischluft- oder Umluftbetrieb betreibbare Klimaanlage von Kraftfahrzeugen, wobei von der Bedienperson oder Automatik gewählter Stellung "Umluftbetrieb" beim ersten Anlaufen der Klimaanlage nach dem Start des Kraftfahrzeugmotors diese zunächst für einen kurzen Zeitraum im Frischluftbetrieb betrieben wird, dadurch gekennzeichnet, daß der Frischluftbetrieb unabhängig von der Außentemperatur, der Innenraumtemperatur und der eingestellten Solltemperatur erfolgt und der Zeitraum für den Frischluftbetrieb über ein Zeitglied vorgegeben wird.

## Claims

1. Control system for a motor vehicle air conditioner which can be operated in either fresh air operation or recirculating air operation, in which from the "recirculating air operation" position selected by the operator, or automatically, the air conditioner is first operated for a short period in fresh air operation when the said air conditioner is first started after starting the motor vehicle engine, characterized in that the fresh air operation takes place independently of the outside temperature, the interior temperature and the set desired temperature, and the period for the fresh air operation is preset through a timing element.

## Revendications

1. Commande pour une installation de conditionnement d'air de véhicules automobiles, qui peut fonctionner soit en air frais soit en air recyclé, la position "fonctionnement à l'air recyclé" choisie par le conducteur ou automatiquement lors de la première mise en marche de l'installation de conditionnement d'air après le démarrage du moteur du véhicule automobile faisant d'abord fonctionner l'installation à l'air frais pendant un court laps de temps, caractérisée en ce que le fonctionnement à l'air frais se fait indépendamment de la température extérieure, de la température de l'intérieur et de la température de consigne réglée, et en ce que l'intervalle de temps pour le fonctionnement à l'air frais est déterminé par l'intermédiaire d'une horloge.